**Europäisches Patentamt**

**European Patent Office**

**Office européen des brevets**

(11) Veröffentlichungsnummer: **0 032 572**
**B1**

(12) # EUROPÄISCHE PATENTSCHRIFT

(45) Veröffentlichungstag der Patentschrift:
31.08.83

(51) Int. Cl.³: **C 08 F 8/42,** C 08 F 8/12,
C 08 F 118/08, C 08 F 116/06

(21) Anmeldenummer: 80108077.1

(22) Anmeldetag: 20.12.80

(54) Verfahren zur Herstellung einer Polyvinylalkohol-Komplexverbindung und danach hergestellte Polyvinylalkohol-Komplexverbindung.

(30) Priorität: 11.01.80 DE 3000839

(43) Veröffentlichungstag der Anmeldung:
29.07.81 Patentblatt 81/30

(45) Bekanntmachung des Hinweises auf die Patenterteilung:
31.08.83 Patentblatt 83/35

(84) Benannte Vertragsstaaten:
AT BE CH DE FR GB IT LI LU NL SE

(56) Entgegenhaltungen:
DE-A-1 570 282
GB-A-829 634
GB-A-1 168 757

(73) Patentinhaber: **HOECHST AKTIENGESELLSCHAFT,**
**Postfach 80 03 20, D-6230 Frankfurt am Main 80 (DE)**

(72) Erfinder: **Zimmermann, Wolfgang, Dr., Im Stückes 48,**
**D-6233 Kelkheim (Taunus) (DE)**
Erfinder: **Pospich, Günther, Albert-Blank-Strasse 6,**
**D-6230 Frankfurt am Main 80 (DE)**

ACTORUM AG

## Verfahren zur Herstellung einer Polyvinylalkohol-Komplexverbindung und danach hergestellte Polyvinylalkohol-Komplexverbindung

Die Erfindung bezieht sich auf ein Verfahren zur Herstellung einer Komplexverbindung aus Polyvinylalkohol und einer mit Hydroxyverbindungen Komplexe bildenden Verbindung und die danach hergestellte Polyvinylalkohol-Komplexverbindung.

Es ist bekannt, dass Polyvinylalkohol (PVAL) mit mehrbasigen anorganischen Säuren, z.B. Borsäure, Komplexe bildet (vgl. J.G. Pritchard, „Polyvinyl Alcohol", Gordon and Breach Science Publishers, London, 1970, S. 73 und 74). Infolge der Komplexbildung entsteht aus der wässerigen PVAL-Lösung ein Gel, das sich zur Herstellung von Klebstoffen eignet. An Stelle von Borsäure sind auch andere wasserlösliche anorganische Borverbindungen verwendbar, z.B. Borax, Natriummetaborat und Natriumpentaborat (vgl. US-Patentschrift Nr. 3135648). Das Gel erhält man in bekannter Weise dadurch, dass entweder eine heisse wässerige Lösung der Borverbindung mit einer heissen wässerigen PVAL-Lösung gemischt wird oder die Borverbindung mit einem PVAL in kaltem Wasser vermischt und das Gemisch dann erhitzt wird oder die Borverbindung mit einem PVAL in trockenem Zustand vermischt und das Gemisch dann am Ort der Anwendung in Wasser erhitzt wird.

Die bekannten Verfahren zur Herstellung von PVAL-Komplexen haben verschiedene Nachteile. Einerseits sind die genannten anorganischen Borverbindungen nur begrenzt in kaltem Wasser löslich, so dass relativ grosse Volumina der Lösungen benötigt werden, und andererseits ist die Herstellung homogener Gemische schwierig, da bei Zugabe einer gelösten Borverbindung zu einer PVAL-Lösung infolge einer örtlichen Überkonzentration an der Zugabestelle bereits der unlöslich PVAL-Komplex ausfällt. Ferner sind PVAL und Borverbindung in trockenem Zustand verschieden in Korngrösse und Dichte, und das trockene Gemisch neigt daher bei Lagerung und Transport zur Entmischung.

Ferner ist bekannt, dass durch Verseifen oder Umestern von Äthylen/Vinylester-Copolymeren unter Verwendung alkalischer oder saurer Katalysatoren in Gegenwart niederer Alkohole wie Methanol und/oder Äthanol und in Anwesenheit von Verbindungen der Elemente der III. Hauptgruppe oder der IV. Nebengruppe des Periodischen Systems der Elemente, in denen das Bor oder die Metallatome mit mindestens 3 negativ geladenen Resten verbunden sind, transparente Äthylen/Vinylalkohol-Copolymere erhältlich sind (vgl. deutsche Offenlegungsschrift Nr. 1570282). Die als Ausgangsmaterial verwendeten Copolymere enthalten im allgemeinen 5 bis 80 Gew.% Vinylester wie Vinylacetat oder Vinylpropionat einpolymerisiert, und als Borverbindungen werden Borsäureester wie Borsäuretrimethylester, Borsäuretriäthylester und Borsäureglycerinester eingesetzt, bevorzugt jedoch Borsäure und Borate, z.B. Borax. Die Menge dieser Verbindungen im Endprodukt ist sehr gering; sie liegt zwischen 0,03 und 0,3 Gew.%.

Aufgabe der Erfindung ist es nun, unter Vermeidung der dargelegten Nachteile in einfacher Weise einen PVAL herzustellen, der unabhängig von der Korngrösse homogen mit einem Komplexbildner reagiert hat.

Die Erfindung betrifft ein Verfahren zur Herstellung einer Komplexverbindung aus Polyvinylalkohol und einer mit Hydroxyverbindungen Komplexe bildenden Verbindung und ist dadurch gekennzeichnet, dass ein Polyvinylester in alkoholischer Lösung in Gegenwart eines alkohollöslichen organischen Borsäurederivats, das direkt als Komplexbildner wirkt oder unter den Reaktionsbedingungen in einen Komplexbildner umgewandelt wird, in einer Menge von 0,5 bis 50 Gew.% (bezogen auf Polyvinylester) unter an sich bekannten Bedingungen einer Alkoholyse unterworfen wird.

Als Ausgangsmaterial wird ein Polyvinylester verwendet, dessen Säurekomponente vorzugsweise 1, 2 oder 3 Kohlenstoffatome aufweist. Der Polymerisationsgrad des Polyvinylesters beträgt vorzugsweise 400 bis 10000 und insbesondere 450 bis 6000 (bestimmt aus dem Gewichtsmittel des Molekulargewichts, ermittelt nach der Lichtstreuungsmethode mit Quecksilberdampflicht). Besonders geeignet ist Polyvinylacetat. Der Polyvinylester wird üblicherweise durch Massepolymerisation oder vorzugsweise durch Lösungspolymerisation hergestellt, wobei als Lösungsmittel ein niederer aliphatischer Alkohol mit 1, 2 oder 3 Kohlenstoffatomen, vorzugsweise Methanol, verwendet wird.

Die Alkoholyse des Polyvinylesters wird mit einem niederen aliphatischen Alkohol durchgeführt, der vorzugsweise 1, 2 oder 3 Kohlenstoffatome aufweist; besonders geeignet ist Methanol. Die Konzentration des Polyvinylesters in der alkoholischen Lösung beträgt normalerweise 10 bis 70 Gew.%., vorzugsweise 15 bis 60 Gew.%.

Die Alkoholyse, vorzugsweise Methanolyse, erfolgt in Gegenwart eines basischen Katalysators. Als Katalysator wird vor allem ein Alkalialkoholat oder ein Alaklihydroxid eingesetzt, z.B. Natriummethylat, Kaliummethylat, Natriumäthylat, Kaliumäthylat sowie Natriumhydroxid und Kaliumhydroxid. Der Katalysator wird in einer Menge von 1 bis 30 Gew.%, vorzugsweise von 3 bis 20 Gew.% (bezogen auf Polyvinylester), eingesetzt. Es ist empfehlenswert, den Katalysator in gelöster Form zu verwenden, wobei als Lösungsmittel vorzugsweise derselbe Alkohol benutzt wird, in dem der Polyvinylester gelöst ist.

Das wesentliche Merkmal des erfindungsgemässen Verfahrens ist die Durchführung der Alkoholyse in Gegenwart einer Verbindung, die in dem vorgenannten niederen aliphatischen Alkohol löslich ist und entweder direkt als Komplexbildner wirkt oder unter den Reaktionsbedingungen in einen Komplexbildner umgewandelt wird. Als solche verkappten Komplexbildner sind vor allem organische Borsäurederivate geeignet, insbesondere Borsäureester mit vorzugsweise 1, 2 oder 3 Kohlenstoffatomen in der Alkoholkomponente. Beispiele hierfür sind Borsäuretrimethylester, Borsäuretriäthylester und Borsäuretripropylester. Die alkohollösliche Borverbindung wird in einer Menge von 0,5 bis 50 Gew.%, vorzugsweise 1 bis 40 Gew.% (bezogen auf Polyvinylester), eingesetzt. Es ist vorteilhaft, die Borverbindung in Form einer Lösung anzuwenden; als Lösungsmittel dient dabei vorzugsweise derselbe Alkohol, in dem der Polyvinylester gelöst ist. Die Anwesenheit eines Komplexbildners in gelöster Form während der Bildung des PVAL aus dem Polyvinylester hat den überraschenden Vorteil, dass die Komplexierung des PVAL sehr homogen, d.h. gleichmässig über die PVAL-Molekülketten verteilt, stattfindet.

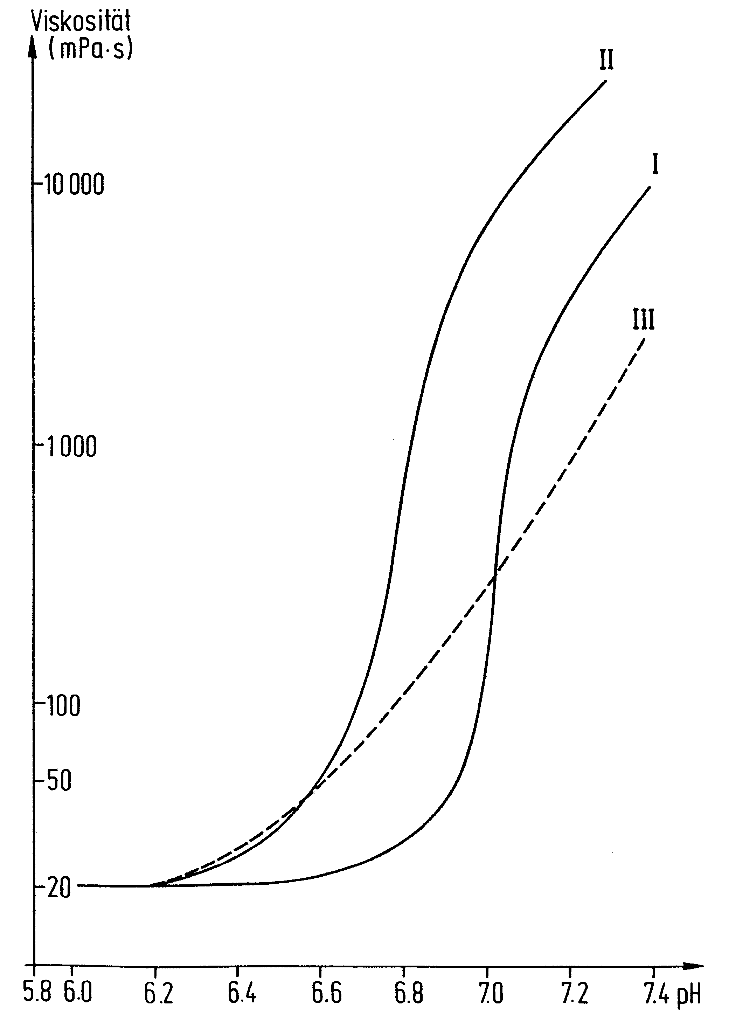

In Fig. 1 ist dargestellt, wie sich die Viskosität von 4gewichtsprozentigen wässerigen Lösungen nach den Beispielen 4 und 5 erfindungsgemäss hergestellten PVAL-Komplexverbindungen in Abhängigkeit vom pH-Wert ändert (vgl. Kurven I und II). Zum Vergleich ist auch der entsprechende Kurvenverlauf für die Lösung einer in herkömmlicher Weise gemäss Vergleichsbeispiel b mit Borsäure hergestellten PVAL-Komplexverbindung wiedergegeben (vgl. Kurve III).

Die Alkoholyse wird im allgemeinen bei einer Temperatur von 10 bis 50°C, vorzugsweise 20 bis 40°C, durchgeführt. Der pH-Wert des Reaktionsgemisches liegt üblicherweise im Bereich von 8 bis 14, vorzugsweise von 9 bis 12.

Eine bevorzugte Ausführungsform des erfindungegemässen Verfahrens besteht darin, dass zunächst eine Polyvinylesterlösung mit einer Komplexbildnerlösung homogen vermischt wird, dann dieses Gemisch unter Rühren gleichmässig mit einer Katalysatorlösung vermischt wird und das erhaltene Reaktionsgemisch stehenlassen wird, gegebenenfalls unter Rühren oder Kneten. Das entstandene Gel wird gegebenenfalls zerkleinert, vorzugsweise durch Zerschneiden mit Hilfe von Messern oder in einer Schneidmühle, mit dem jeweils verwendeten Alkohol gewaschen und schliesslich unter schonenden Bedingungen getrocknet, vorzugsweise bei einer Temperatur von 60 bis 120°C und gegebenenfalls unter Inertgas, vorzugsweise Stickstoff.

Das erfindungsgemässe Verfahren kann in an sich bekannter Weise auch kontinuierlich durchgeführt werden. Dies erfolgt vorzugsweise durch kontinuierliches Aufbringen eines homogenen Gemisches aus Polyvinylesterlösung, Katalysatorlösung und Komplexbildnerlösung auf ein endlos umlaufendes Förderband, anschliessende Abnahme des entstandenen Gels und dessen Zerkleinerung, Reinigung durch Waschen und Trocknung. Das Förderband ist an seiner Oberseite trogförmig geführt und gegebenenfalls auf der Oberfläche, die mit dem Reaktionsgemisch in Berührung kommt, mit einem Polyolefin, vorzugsweise Polyäthylen, beschichtet (vgl. deutsche Patentschrift Nr. 1720709 = britische Patentschrift Nr. 1168757).

Die erfindungsgemäss hergestellten PVAL-Komplexverbindungen werden als Bindemittel und Verdickungsmittel für Streichmassen, insbesondere in der Papierindustrie, und für Klebstoffe verwendet. Filme, die aus wässerigen Lösungen dieser PVAL-Komplexverbindungen hergestellt werden, sind besonders zäh und abriebfest.

Die folgenden Beispiele erläutern die Erfindung. Prozentangaben und Mengenverhältnisse beziehen sich jeweils auf das Gewicht.

*Beispiele 1 bis 5 und Vergleichsbeispiel a*

In einem mit Rührer versehenen Reaktionsgefäss werden jeweils 100 g einer 30prozentigen methanolischen Lösung eines Polyvinylacetats mit einem Polymerisationsgrad von 1800 vorgelegt und nacheinander unter Rühren mit einer 50prozentigen methanolischen Lösung von Borsäuretrimethylester (BTM) und einer 15prozentigen wässerig/methanolischen (1:4) Natronlauge vermischt. Das Reaktionsgemisch wird bei einer Temperatur von 26°C 30 min lang ruhig stehenlassen; bereits nach 15 min ist es geliert, und nach weiteren 15 min ist die Methanolyse des Polyvinylacetats beendet. Das Gel wird mit einem Messer in Würfel mit einer Kantenlänge von etwa 3 mm geschnitten, auf einem Sieb mit Methanol alkalifrei gewaschen und im Trockenschrank bei einer Temperatur von 100°C getrocknet. (In der Mutterlauge ist Bor nicht nachweisbar.) Nach der Trocknung erhält man ein gut rieselfähiges Granulat. Das Lösungsverhalten des Granulats (4prozentig in Wasser) wird bei pH 5,0 und pH 7,4 untersucht (Höppler-Viskosimeter bei 20°C); der pH-Wert von 5,0 wird mit Essigsäure eingestellt und der pH-Wert von 7,4 mit 1prozentiger wässeriger Natriumtrichloracetatlösung und Erwärmen auf 60°C.

Ein Vergleichsbeispiel a wird analog, jedoch ohne Verwendung der Borsäuretrimethylesterlösung, durchgeführt.

Einzelheiten sind aus der nachstehenden Tabelle ersichtlich:

*(Tabelle auf der nächsten Seite)*

*Vergleichsbeispiel b:*

Entsprechend Beispiel 4 wird eine 4prozentige wässerige Lösung eines Gemisches aus 15 g eines Polyvinylalkohols, dessen 4prozentige wässerige Lösung bei 20°C eine Viskosität von 20 mPa·s aufweist und der eine Esterzahl von 18 mg KOH/g besitzt, und 0,75 g Borsäure hergestellt. Die Viskosität dieser Lösung beträgt bei pH 5,0 20 mPa·s und bei pH 7,4 1250 mPa·s (Höppler-Viskosimeter bei 20°C). Der pH-Wert muss mit 1prozentiger wässeriger Natriumtrichloracetatlösung eingestellt werden, da bei Verwendung von 0,01 N-Natronlauge Ausfällungen eintraten.

| Beispiel | a | 1 | 2 | 3 | 4 | 5 |
|---|---|---|---|---|---|---|
| BTM-Menge (g) (rein) | — | 0,5 | 0,75 | 1 | 1,25 | 4 |
| Natronlauge (g) (15%ig) | 2 | 2 | 2,5 | 3 | 3 | 10 |
| pH-Wert des Gemisches | 10 | 10 | 10 | 10 | 10 | 10 |
| Viskosität bei pH 5,0; 4%-Lösung (mPa·s) | 20 | 20 | 20 | 20 | 20 | 20 |
| Viskosität bei pH 7,4; 4%-Lösung (mPa·s) | 19 | 60 | 1600 | 2500 | 10 000 | *) |

*) Viskosität nicht messbar, da PVAL-Komplex unlöslich

## Patentansprüche

1. Verfahren zur Herstellung einer Komplexverbindung aus Polyvinylalkohol und einer mit Hydroxyverbindungen Komplexe bildenden Verbindung, dadurch gekennzeichnet, dass ein Polyvinylester in alkoholischer Lösung in Gegenwart eines alkohollöslichen organischen Borsäurederivats, das direkt als Komplexbildner wirkt oder unter den Reaktionsbedingungen in einen Komplexbildner umgewandelt wird, in einer Menge von 0,5 bis 50 Gew.% (bezogen auf Polyvinylester) unter an sich bekannten Bedingungen einer Alkoholyse unterworfen wird.

2. Verfahren nach Anspruch 1, dadurch gekennzeichnet, dass als Polyvinylester Polyvinylacetat verwendet wird.

3. Verfahren nach Anspruch 1, dadurch gekennzeichnet, dass als Alkohol Methanol verwendet wird.

4. Verfahren nach Anspruch 1, dadurch gekennzeichnet, dass als organisches Borsäurederivat ein Borsäureester verwendet wird.

5. Verfahren nach Anspruch 4, dadurch gekennzeichnet, dass als Borsäureester Borsäuretrimethylester verwendet wird.

6. Verfahren nach Anspruch 1, dadurch gekennzeichnet, dass es kontinuierlich mit Hilfe eines Förderbandes durchgeführt wird.

7. Polyvinylalkohol-Komplexverbindung, hergestellt nach einem der Verfahren gemäss Anspruch 1 bis 6.

## Claims

1. Process for the manufacture of a complex compound of polyvinyl alcohol and a compound forming complexes with hydroxy compounds, characterized in that a polyvinyl ester in alcoholic solution is subjected to alcoholysis, under conditions known as such, in the presence of an organic boric acid derivative soluble in alcohol, which directly acts as a complex-forming agent or which is transformed into a complex-forming agent under the reaction conditions, in an amount of 0.5 to 50% by weight (relative to polyvinyl ester).

2. Process according to claim 1, characterized in that polyvinyl acetate is used as polyvinyl ester.

3. Process according to claim 1, characterized in that methanol is used as alcohol.

4. Process according to claim 1, characterized in that a boric acid ester is used as organic boric acid derivative.

5. Process according to claim 4, characterized in that boric acid trimethyl ester is used as boric acid ester.

6. Process according to claim 1, characterized in that it is carried out continuously by means of a conveyor belt.

7. Polyvinyl alcohol complex compound, prepared according to one of the processes according to claims 1 to 6.

## Revendications

1. Procédé de préparation d'un complexe de poly(alcool vinylique) et d'un composé formant des complexes avec des composés hydroxylés, procédé caractérisé en ce qu'on soumet à une alcoolyse, dans des conditions connues en elles-mêmes, un poly(ester vinylique) en solution alcoolique, en présence d'un dérivé organique de l'acide borique, soluble dans les alcools, qui agit directement comme générateur de complexe ou qui est transformé, dans les conditions de réaction, en un générateur de complexe et que l'on utilise en une quantité de 0,5 à 50% en poids [par rapport au poly(ester vinylique)].

2. Procédé selon la revendication 1, caractérisé en ce qu'on utilise comme poly(ester vinylique) du poly(acétate de vinyle).

3. Procédé selon la revendication 1, caractérisé en ce qu'on utilise comme alcool le méthanol.

4. Procédé selon la revendication 1, caractérisé en ce qu'on utilise comme dérivé organique de l'acide borique un ester de l'acide borique.

5. Procédé selon la revendication 4, caractérisé en ce qu'on utilise comme ester de l'acide borique le borate de triméthyle.

6. Procédé selon la revendication 1, caractérisé en ce qu'il est mis en œuvre continuellement à l'aide d'une bande transporteuse.

7. Complexe de poly(alcool vinylique), préparé par le procédé selon l'une quelconque des revendications 1 à 6.